# EUROPEAN PATENT SPECIFICATION

(11) **EP 3 846 379 B1**
(45) Date of publication and mention of the grant of the patent: **16.07.2025**
(21) Application number: 19856039.3
(22) Date of filing: 30.08.2019
(51) Int. Cl.: H04J 3/06

(54) **CLOCK SYNCHRONIZATION METHOD AND APPARATUS, SYSTEM, STORAGE MEDIUM, AND ELECTRONIC DEVICE**
TAKTSYNCHRONISATIONSVERFAHREN UND -EINRICHTUNG, SYSTEM, SPEICHERMEDIUM UND ELEKTRONISCHE VORRICHTUNG
PROCÉDÉ ET APPAREIL DE SYNCHRONISATION D'HORLOGE, SYSTÈME, SUPPORT DE STOCKAGE, ET DISPOSITIF ÉLECTRONIQUE

(30) Priority: 31.08.2018 CN 201811012739
(43) Date of publication of application: 07.07.2021
(73) Proprietor: ZTE Corporation, Shenzhen Guangdong 518057 (CN)
(72) Inventor: LV, Ming, Shenzhen, Guangdong 518057 (CN); HE, Li, Shenzhen, Guangdong 518057 (CN)
(74) Representative: Pennacchio, Salvatore Giovanni
(86) International application number: PCT/CN2019/103519
(87) International publication number: WO 2020/043181

(56) References cited:
- CN-A- 101 873 188
- CN-A- 104 460 314
- CN-A- 105 610 534
- CN-A- 105 991 205
- CN-A- 108 882 356
- US-A1- 2009 034 672

## Description

### Technical Field

The present disclosure relates to the field of communications, and for example, to a clock synchronization method, apparatus and system, a storage medium, and an electronic device.

### Background

With the mature commercialization of the 4th Generation mobile communication technology (4G) network, mobile broadband is gradually changing people's life. At the same time, the 5th Generation mobile communication technology (5G) is emerging, and the regulation of the 5G standard and the research on key 5G technologies are also gradually accelerated. The development of 5G highly relies on the research on bearers, and a bearer network serving as an end-to-end network connecting a wireless network and a core network is self-evidently important in the commercialization of 5G.

As a basic technology of 5G, a high-precision time synchronization technology in the related art can provide an ultra-high-precision time synchronization carrier for application scenarios such as indoor positioning, automatic driving, etc. of the Internet of Things.

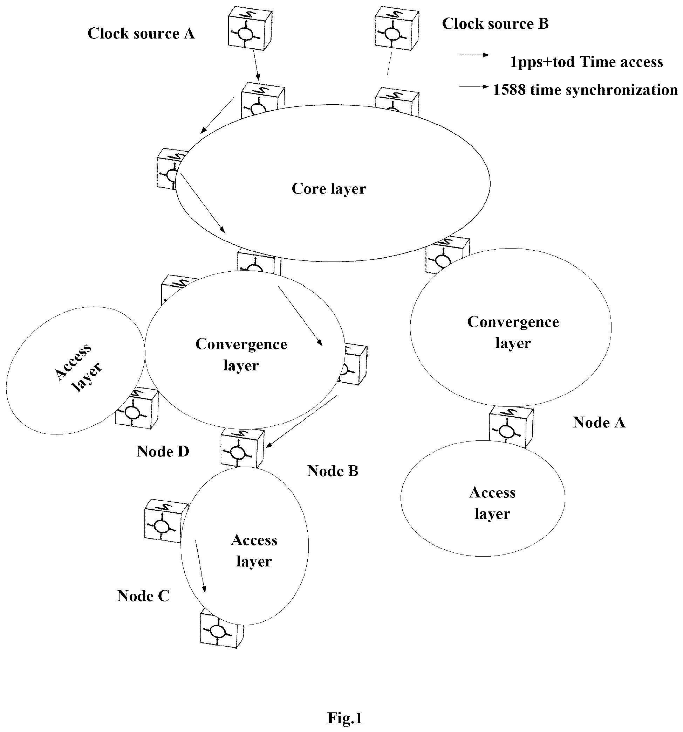

In the related art, a 1588-based time synchronization technology is applied in the field of communications. Fig. 1 is a schematic diagram of a networking mode in the time synchronization technology in the related art of the present disclosure. As shown in Fig. 1, the basic operation principle is as follows. According to a first manner, main/standby clock sources are deployed in the entire network. As shown in Fig. 1, time information is accessed to a core landing location through 1 pps + tod, and 1588-based time transmission is deployed in the network, so as to achieve the time synchronization in the entire network.

According to a second manner, a time signal is directly accessed to the base station by using a Global Positioning System (GPS).

There are the following deficiencies in the related art.

With regard to the described first manner: a first deficiency is that the 1pps+tod time access method will introduce transmission delay of 1pps signal in a cable and a chip; a second deficiency is that 1588-based transmission will introduce an asymmetric delay, and the transmission nodes leads to time error accumulation; and a third deficiency is that 15 88-based time transmission is limited by the length of a fiber, and is limited by the number of transmission nodes, so long-distance transmission cannot be implemented.

With regard to the described second manner: a first deficiency is that each base station needs to be deployed with a GPS, and the deployment cost is high; and a second deficiency is that the GPS deployed by the base station has low time accuracy.

No effective solution has been found for the described problem existing in the related art. Document CN 105 991 205 A relates to a method of implementing fully synchronous communication network which is verifiable and adjustable.

### Summary

Embodiments of the present disclosure provide a clock synchronization method, apparatus and system, a storage medium, and an electronic device, according to the appended dependent claims.
Fig. 1 is a schematic diagram of a networking mode in the time synchronization technology in the related art of the present disclosure;
Fig. 2 is a diagram of the network architecture according to an embodiment of the present disclosure;
Fig. 3 is a flowchart of a clock synchronization method according to an embodiment of the present disclosure;
Fig. 4 is a flowchart of another clock synchronization method according to an embodiment of the present disclosure;
Fig. 5 is a structural block diagram of a clock synchronization apparatus according to an embodiment of the present disclosure;
Fig. 6 is a structural block diagram of another clock synchronization apparatus according to an embodiment of the present disclosure;
Fig. 7 is a schematic diagram of internal functions of an apparatus according to an embodiment not part of the present disclosure;
Fig. 8 is a schematic diagram of a networking mode according to an embodiment of the present disclosure.

### Detailed Description of the Embodiments

The present disclosure is described below in detail with reference to the drawings and in conjunction with the embodiments. It is to be noted that embodiments in the present application and characteristics in the embodiments may be combined to derive other embodiments not explicitly described.

It is to be noted that the terms "first", "second" and the like in the specification, the claims and the drawings of the present disclosure are used to distinguish similar objects, and are not used to describe a specific sequence or a precedence order.

### Embodiment 1

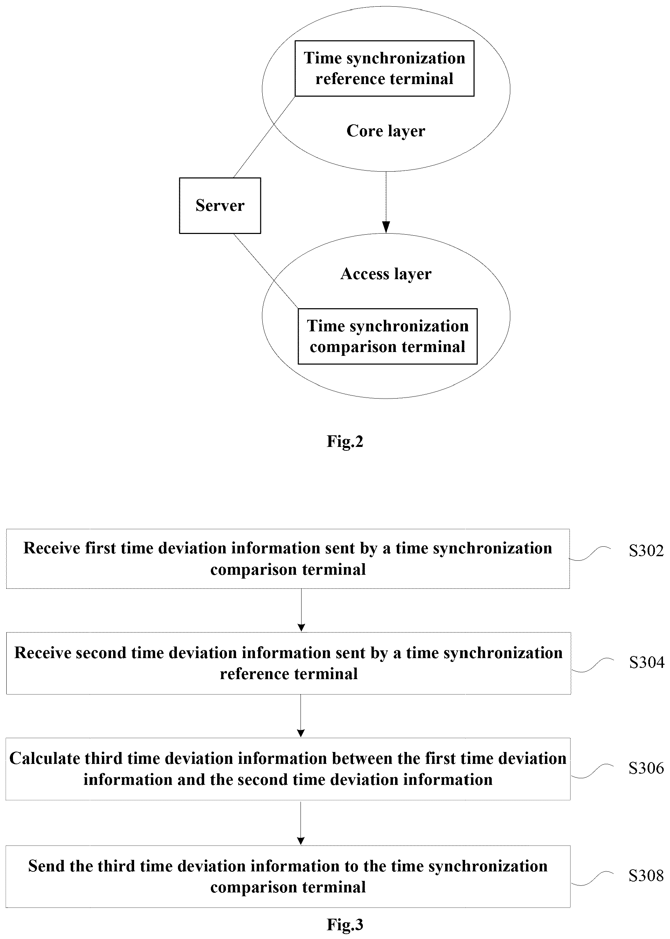

The embodiment of the present application can run on the network architecture shown in Fig. 2. Fig. 2 is a diagram of the network architecture of an embodiment of the present disclosure. As shown in Fig. 2, the network architecture includes: a time synchronization reference terminal, a time synchronization comparison terminal and a server. The time synchronization reference terminal and the time synchronization comparison terminal perform time synchronization through the server.

This embodiment provides a clock synchronization method running on the above network architecture. Fig. 3 is a flowchart of a clock synchronization method according to an embodiment of the present disclosure. As shown in Fig. 3, the method includes operations S302 to S308.

In operation S302, first time deviation information sent by a time synchronization comparison terminal is received.

The first time deviation information is acquired by the time synchronization comparison terminal through calculation according to a first external clock source and a first local clock source.

In operation S304, second time deviation information sent by a time synchronization reference terminal is received.

The second time deviation information is acquired by the time synchronization reference terminal through calculation according to a second external clock source and a second local clock source.

In operation S306, third time deviation information between the second time deviation information and the first time deviation information is calculated.

In operation S308, the third time deviation information is sent to a time synchronization comparison terminal.

By means of the operations, a time deviation between the time synchronization reference terminal and the time synchronization comparison terminal is calculated, and the time deviation is sent to the time synchronization comparison terminal, thereby realizing clock synchronization between the time synchronization comparison terminal and the time synchronization reference terminal, solving the problem in the related art that an error is too large when performing clock synchronization through a transmission node, and improving the accuracy of clock synchronization.

In some exemplary implementations of the embodiment, the entity for executing the foregoing operations is, a server.

In some exemplary implementations of the embodiment, the operation of calculating the third time deviation information between the second time deviation information and the first time deviation information may be implemented in the following manner. A difference value between the first time deviation information and the second time deviation information is calculated by taking the second time deviation information as a reference value, and the difference value is determined as the third time deviation information. In this way, the time synchronization comparison terminal follows the time synchronization reference terminal. For example, if the second time deviation information is 20 nanoseconds and the first time deviation information is 10 nanoseconds, then the third time deviation information is 10 nanoseconds, and the time synchronization comparison terminal is turned forward by 10 nanoseconds, so that the time synchronization comparison terminal follows the time synchronization reference terminal.

In some exemplary implementations of the embodiment, the operation of receiving the second time deviation information sent by the time synchronization reference terminal may be implemented in the following manner. A time synchronization reference terminal with a highest priority is selected from a plurality of time synchronization reference terminals as a designated time synchronization reference terminal. The second time deviation information sent by the designated time synchronization reference terminal is received. One time synchronization comparison terminal may simultaneously correspond to a plurality of time synchronization reference terminals, and a time synchronization reference terminal with a highest priority may be selected as the designated time synchronization reference terminal which the time synchronization comparison terminal follows.

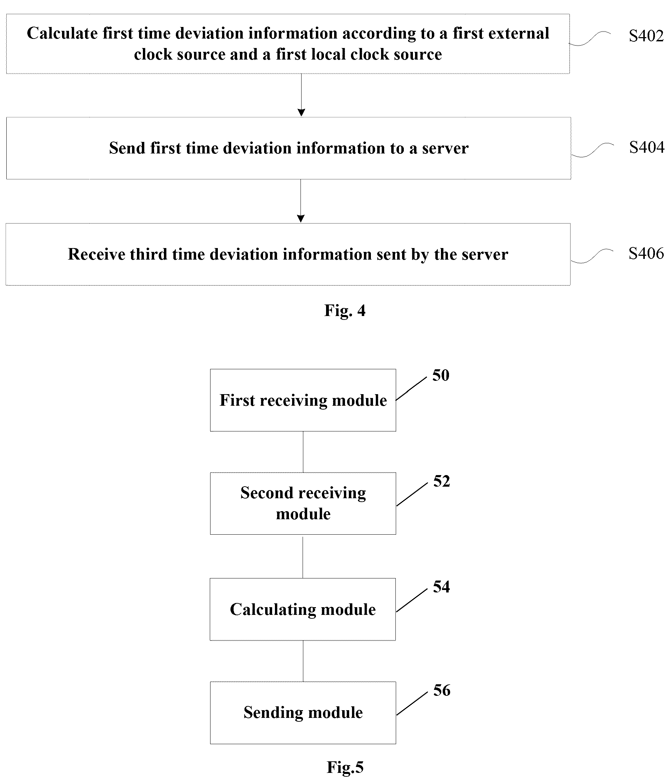

Another clock synchronization method running on the network architecture is provided in this embodiment. Fig. 4 is a flowchart of another clock synchronization method according to an embodiment of the present disclosure. This clock synchronization method is performed by a time synchronization comparison terminal. As shown in Fig. 4, the flow includes operations S402 to S406.

In operation S402, first time deviation information is calculated according to a first external clock source and a first local clock source.

In operation S404, the first time deviation information is sent to the server.

The server is connected to the time synchronization comparison terminal and a time synchronization reference terminal.

In operation S406, third time deviation information sent by the server is received.

The third time deviation information is acquired by the server according to second time deviation information and the first time deviation information, wherein the second time deviation information is acquired by the time synchronization reference terminal through calculation according to a second external clock source and a second local clock source.

In some exemplary implementations of the embodiment, the operation of calculating the first time deviation information according to the first external clock source and the first local clock source includes operations S11 and S12.

In operation S11, clock information of a first external clock source and clock information of a first local clock source are acquired. The clock information of the first external clock source may be clock information (for example, information such as ephemeris and/or navigation) of a visible satellite (not limited to a visible satellite, and may include visible media such as a broadcast, a television, a communication and a power tower). The clock information of the first local clock source may be clock information of a local clock signal generator, such as a high-stability crystal oscillator or an atomic clock (for example, a rubidium atomic clock or a cesium atomic clock).

In operation S12, phase detection is performed between the clock information of the first external clock source and the clock information of the first local clock source to acquire the first time deviation information.

In some exemplary implementations of the embodiment, after receiving the third time deviation information sent by the time synchronization reference terminal, the method may further include the following operations. A local clock of the time synchronization comparison terminal is adjusted based on the third time deviation information, to synchronize the local clock of the time synchronization comparison terminal with a local clock of the time synchronization reference terminal. The adjusted local clock of the time synchronization comparison terminal is provided to at least one access layer device.

The operation of acquiring the second time deviation information by the time synchronization reference terminal through calculation according to the second external clock source and the second local clock source includes operations S21 and S22.

In operation S21, clock information of a second external clock source and clock information of a second local clock source are acquired. The clock information of the second external clock source may be clock information (for example, information such as ephemeris and/or navigation) of a visible satellite (not limited to a visible satellite, and may include visible media such as a broadcast, a television, a communication and a power tower). The clock information of the second local clock source may be clock information of a local clock signal generator, such as a high-stability crystal oscillator or an atomic clock (for example, a rubidium atomic clock or a cesium atomic clock).

In operation S22, phase detection is performed between the clock information of the second external clock source and the clock information of the second local clock source to acquire the second time deviation information.

Through the description of the above implementations, those having ordinary skill in the art can understand that the method according to the above embodiment may be implemented by means of software plus a necessary general hardware platform, and of course, may also be implemented through hardware, but in many cases, the former is a better implementation. Based on such understanding, the essence of technical solution of the embodiments of the present disclosure, or in other words, the part of the technical solutions making contributions to the conventional art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present disclosure.

### Embodiment 2

The embodiment further provides a clock synchronization apparatus and system, which are configured to implement the described embodiments and optional implementations, and the details having been described will not be repeated. As used below, the term "module" may implement a combination of software and/or hardware of a predetermined function. Although the apparatus described in the following embodiments is preferably implemented in software, the implementation in hardware or a combination of software and hardware is also possible and contemplated.

Fig. 5 is a structural block diagram of a clock synchronization apparatus according to an embodiment of the present disclosure. The clock synchronization apparatus is applied to a server. As shown in Fig. 5, the apparatus includes:
a first receiving module 50, configured to receive first time deviation information sent by a time synchronization comparison terminal, wherein the first time deviation information is acquired by the time synchronization comparison terminal through calculation according to a first external clock source and a first local clock source;
a second receiving module 52, configured to receive second time deviation information sent by a time synchronization reference terminal, wherein the second time deviation information is acquired by the time synchronization reference terminal through calculation according to a second external clock source and a second local clock source;
a calculating module 54, configured to calculate third time deviation information between the second time deviation information and the first time deviation information; and
a sending component 56, configured to send the third time deviation information to the time synchronization comparison terminal.

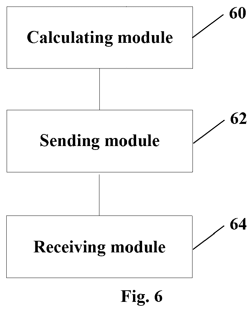

Fig. 6 is a structural block diagram of another clock synchronization apparatus according to an embodiment of the present disclosure. The clock synchronization apparatus is applied to a time synchronization comparison terminal. As shown in Fig. 6, the apparatus includes:
a calculating module 60, configured to calculate first time deviation information according to a first external clock source and a first local clock source;
a sending module 62, configured to send the first time deviation information to a server, wherein the server is connected to the time synchronization comparison terminal and a time synchronization reference terminal; and
a receiving module 64, configured to receive third time deviation information sent by a server, wherein the third time deviation information is acquired by the server according to second time deviation information and the first time deviation information, and the second time deviation information is acquired by the time synchronization reference terminal through calculation according to a second external clock source and a second local clock source.

The embodiment further provides a clock synchronization system, including a server as shown in Fig. 5, a time synchronization comparison terminal as shown in Fig. 6, and a time synchronization reference terminal.

It is to be noted that each of the above modules may be implemented by software or hardware. For the latter, the modules may be implemented by, but not limited to, either of the following manners: the above modules are all located in the same processor; or, the above modules are located in different processors in any combination form respectively.

### Embodiment 3

The embodiment provides a time synchronization apparatus, which can implement clock synchronization with an ultra-high precision and can be applied to a bearer network of the networking.

According to one aspect, not part of the invention, a time synchronization solution with an ultra-high precision is provided. The time synchronization solution includes operations 1 to 3.

In operation 1, a time reference terminal (equivalent to a time synchronization reference terminal) and a comparison terminal (equivalent to a time synchronization comparison terminal) simultaneously observe a plurality of visible satellites (not limited to visible satellites, other visible media such as broadcasting, television, communication, and power tower are also applicable) in a prescribed observation plan, and acquire clock information (for example, ephemeris, navigation information, etc.). The comparison terminal compares a local reference clock with the clock information of the plurality of satellites to acquire a deviation between the local reference time and the clock time information of the plurality of satellites, and sends the data to the reference terminal through the network after completing the observation of one observation period.

In operation 2, after correcting, by a processing center of the reference terminal, an observation error between the comparison terminal and the reference terminal, the processor center of the reference terminal calculates and acquires a clock deviation between the comparison terminal and the reference terminal, and sends clock correction information to the comparison terminal via a network.

In operation 3, after receiving the clock correction information, the comparison terminal adjusts the local clock according to a control strategy to keep synchronization with the reference terminal.

Another aspect, not part of the invention, provides an application example of the described time synchronization apparatus in a network. The application process includes operations 1 to 3.

In operation 1, a reference terminal is deployed at a core landing location, and a plurality of comparison terminals are deployed at a plurality of access layers. The reference terminal may use a local high-stability time source (for example, a rubidium atomic clock or a cesium atomic clock) or an external higher-quality time source, and is configured with corresponding quality level information according to the quality of the used time source.

In operation 2, a communication link between the comparison terminal and the reference terminal is constructed and allocated with the corresponding link priority. The terminals can be addressed on demand by configuring an Internet Protocol Address (IP) and a Media Access Control (MAC) address of the terminal device, and the communication messages can be sent between the terminals in constructed wired or wireless communication manners. The comparison terminal may extract the quality level information (or other information such as clock precision) from the received message, and selectively trace the time/frequency information of the reference terminal based on the priority.

In operation 3, after synchronizing the comparison terminal with the reference terminal in terms of time/frequency, time/frequency information is provided to at least one access layer device.

In an embodiment, not part of the invention, the reference terminal also has the function of a comparison terminal, and can perform time synchronization with a reference terminal of a higher level according to actual requirements.

The present disclosure is described below with reference the accompanying drawings:

### Implementation 1

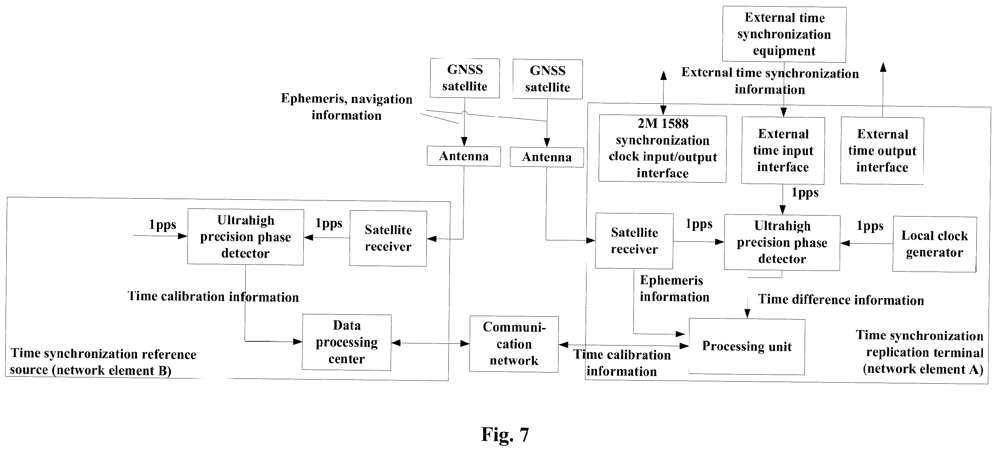

The synchronization function is implemented by a time comparison device. Fig. 7 is a schematic diagram of internal functions of an apparatus according to an embodiment of the present disclosure. As shown in Fig. 7, the flow includes operations 101 to 103.

In operation 101, a time synchronization reference terminal and a time synchronization comparison terminal of the apparatus of the present disclosure simultaneously observe the visible satellites where the time synchronization reference terminal and the time synchronization comparison terminal are respectively located. The information such as ephemeris and navigation is parsed out by a satellite receiver after acquiring information from a Global Navigation Satellite System (GNSS) through a satellite antenna in the figure, and ultrahigh-precision phase detection is performed between the parsed information and a local clock generated by a local clock signal generator (high-stability crystal oscillator or atomic clock). After that, local time deviation information is sent to the time reference terminal through a wired or wireless communication network or a satellite communication network.

In operation 102, the time synchronization reference terminal calculates a time deviation from a satellite navigation system based on a high-stability time source (for example, a rubidium atomic clock or a cesium atomic clock) in the network. The time synchronization reference source device (the network element B) acquires a time deviation of a time comparison terminal (the network element A) via a network, corrects errors of an observation star clock, ephemeris and a path propagation delay between the comparison terminal and the reference source, and calculates a time deviation between the comparison terminal and the reference source. The time reference source (the network element B) serves as a reference, and corrected time deviation information is returned to the time comparison terminal (the network element A) through the network.

In operation 103, after acquiring the corrected time deviation information, the time comparison terminal (the network element A) adjusts the local time source (of the network element A) according to a control strategy in combination with an ageing curve of the local clock frequency, and keeps synchronization with the time reference source (the network element B).

In addition, the time synchronization comparison terminal (the network element A) further provides a plurality of clock interfaces, such as external time input, output, 1588, 2M clock input and output, which are applicable to a plurality of occasions. Since the embodiments of the present disclosure can realize ultra-high precision time synchronization performance, the solution in the embodiments of the present disclosure can be used as a time source reference to test the performance of other external time synchronization devices.

### Implementation 2

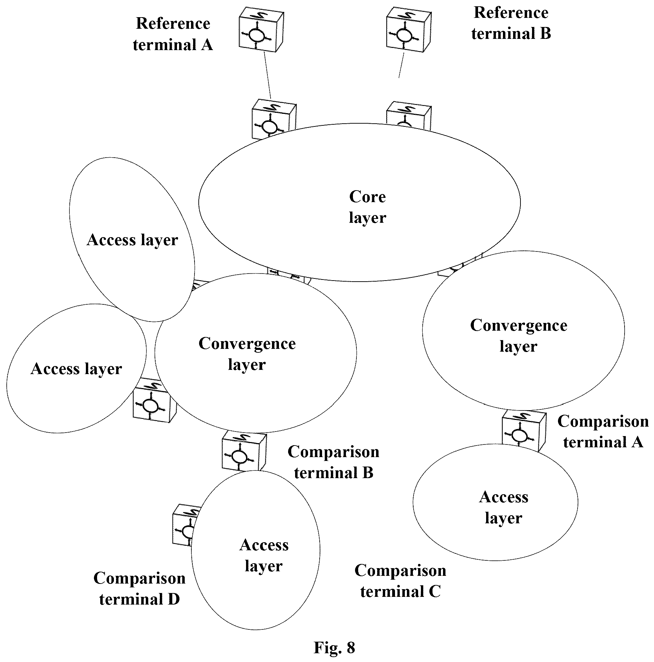

The network may be deployed in the following manner. As shown in Fig. 8 which is a schematic diagram of a networking mode according to an embodiment of the present disclosure, the flow includes operations 201 to 204.

In operation 201, a reference terminal is deployed in a core layer network. The reference terminal may use a local high-stability time source (for example, a rubidium atomic clock or a cesium atomic clock) or an external higher-quality time source, and may be configured with corresponding quality level information according to the quality of the used time source.

In operation 202, a comparison terminal is deployed in an access layer network, communication links between the reference terminal and the comparison terminal are configured and established through a bearer network (or a wireless network), and a priority of each link is configured.

In operation 203, the comparison terminal extracts the quality level information in messages from all receivable reference terminals, and selects a single available source for time/frequency tracking according to the priority of the link. In the case that the selected source link is interrupted (or quality degradation occurs), source switching may be performed.

In operation 204, based on parameters such as the received quality level and priority information of the comparison terminal, the comparison terminal sends an Extended Synchronization Status Message (ESSM) message, a 1588 message, or a tod message to provide time/frequency information for the access loop device.

By means of the solution of the present embodiment, the number of transfer nodes of time/frequency information in a network can be reduced, and higher clock time synchronization precision is provided for an access layer device or a base station. Super long-distance clock time synchronization can be realized, which facilitates constructing a nation-wide web. The effect of asymmetric delay brought about based on the 1588 protocol or the effect of cable compensation brought about based on the 1pps+tod synchronization can be solved. The embodiments of the present invention can replace a networking mode in which a base station is externally connected to a GPS, thereby being beneficial to reducing the deployment cost of the base station externally connected to the GPS, and being beneficial to solving the interference caused by a pseudo GPS.

### Embodiment 4

Embodiments of the present disclosure further provide a storage medium. The storage medium stores a computer program. The computer program is configured to execute the operations in any one of the method embodiments when running.

In some exemplary implementations of the embodiment, the storage medium may be configured to store a computer program for executing the following operations S1 to S4.

In operation S1, first time deviation information sent by a time synchronization comparison terminal is received, wherein the first time deviation information is acquired by the time synchronization comparison terminal through calculation according to a first external clock source and a first local clock source.

In operation S2, second time deviation information sent by a time synchronization reference terminal is received, wherein the second time deviation information is acquired by the time synchronization reference terminal through calculation according to a second external clock source and a second local clock source.

In operation S3, third time deviation information between the second time deviation information and the first time deviation information is calculated.

In operation S4, the third time deviation information is sent to the time synchronization comparison terminal.

In some exemplary implementations of the embodiment, the storage medium may include a plurality of media that can store a computer program, such as a Universal Serial Bus flash disk (USB disk), a Read-Only Memory (ROM), a Random Access Memory (RAM), a mobile hard disk, a magnetic disk, or an optical disk.

Embodiments of the present disclosure also provide an electronic device, including a memory and a processor. The memory stores a computer program. The processor is configured to run the computer program to execute operations in any one of the method embodiments.

In some exemplary implementations of the embodiment, the electronic device may further include a transmission device and an input/output device, wherein the transmission device is connected to the processor, and the input/output device is connected to the processor.

In some exemplary implementations of the embodiment, the processor may be configured to execute the following operations S1 to S4 by means of a computer program:
In operation S1, first time deviation information sent by a time synchronization comparison terminal is received, wherein the first time deviation information is acquired by the time synchronization comparison terminal through calculation according to a first external clock source and a first local clock source.
In operation S2, second time deviation information sent by a time synchronization reference terminal is received, wherein the second time deviation information is acquired by the time synchronization reference terminal through calculation according to a second external clock source and a second local clock source.
In operation S3, third time deviation information between the second time deviation information and the first time deviation information is calculated.
In operation S4, the third time deviation information is sent to the time synchronization comparison terminal.

Alternatively, examples in this embodiment may refer to the examples described in the foregoing embodiments and exemplary implementations, and details are not repeatedly described herein in this embodiment.

A plurality of the above-mentioned modules or operations in the present disclosure may be implemented by using a general computation apparatus, may be centralized on a single computation apparatus or may be distributed on a network composed of multiple computation apparatuses. Optionally, they may be implemented by using executable program codes of the computation apparatuses. Thus, they may be stored in a storage apparatus and executed by the computation apparatuses, the shown or described operations may be executed in a sequence different from this sequence under certain conditions, or they are manufactured into each integrated circuit module respectively, or multiple modules or operations therein are manufactured into a single integrated circuit module. Thus, the embodiments of the present disclosure are not limited to any specific hardware and software combination.

## Claims

1. A clock synchronization method, performed by a server, comprising:
receiving (S302) first time deviation information sent by a time synchronization comparison terminal, wherein the first time deviation information is acquired by the time synchronization comparison terminal through calculation according to a first external clock source and a first local clock source;
receiving (S304) second time deviation information sent by a time synchronization reference terminal, wherein the second time deviation information is acquired by the time synchronization reference terminal through calculation according to a second external clock source and a second local clock source;
calculating (S306) third time deviation information between the second time deviation information and the first time deviation information; and
sending (S308) the third time deviation information to the time synchronization comparison terminal, wherein the third time deviation information is configured for adjusting a local clock of the time synchronization comparison terminal, to synchronize the local clock of the time synchronization comparison terminal with a local clock of the time synchronization reference terminal; and providing the adjusted local clock of the time synchronization comparison terminal to at least one access layer device.

2. The method according to claim 1, wherein calculating (S306) the third time deviation information between the second time deviation information and the first time deviation information comprises:
calculating a difference between the first time deviation information and the second time deviation information by taking the second time deviation information as a reference value, and determining the difference as the third time deviation information.

3. The method according to claim 1, wherein receiving (S304) the second time deviation information sent by the time synchronization reference terminal comprises:
selecting a time synchronization reference terminal with a highest priority from a plurality of time synchronization reference terminals as a designated time synchronization reference terminal;
receiving the second time deviation information sent by the designated time synchronization reference terminal.

4. A clock synchronization method performed by a time synchronization comparison terminal, the method comprising:
calculating (S402) first time deviation information according to a first external clock source and a first local clock source;
sending (S404) the first time deviation information to a server, wherein the server is connected to the time synchronization comparison terminal and a time synchronization reference terminal; and
receiving (S406) third time deviation information sent by the server, wherein the third time deviation information is acquired by the server according to second time deviation information and the first time deviation information, and the second time deviation information is acquired by the time synchronization reference terminal through calculation according to a second external clock source and a second local clock source;
adjusting a local clock of the time synchronization comparison terminal based on the third time deviation information, to synchronize the local clock of the time synchronization comparison terminal with a local clock of the time synchronization reference terminal; and
providing the adjusted local clock of the time synchronization comparison terminal to at least one access layer device.

5. The method according to claim 4, wherein calculating (S402) the first time deviation information according to the first external clock source and the first local clock source comprises:
acquiring clock information of the first external clock source and clock information of the first local clock source; and
performing a phase detection between the clock information of the first external clock source and the clock information of the first local clock source to acquire the first time deviation information.

6. A clock synchronization apparatus, comprising:
a first receiving module (50), configured to receive first time deviation information sent by a time synchronization comparison terminal, wherein the first time deviation information is acquired by the time synchronization comparison terminal through calculation according to a first external clock source and a first local clock source;
a second receiving module (52), configured to receive second time deviation information sent by a time synchronization reference terminal, wherein the second time deviation information is acquired by the time synchronization reference terminal through calculation according to a second external clock source and a second local clock source;
a calculating module (54), configured to calculate third time deviation information between the second time deviation information and the first time deviation information; and
a sending module (56), configured to send the third time deviation information to the time synchronization comparison terminal, wherein the third time deviation information is configured for adjusting a local clock of the time synchronization comparison terminal, to synchronize the local clock of the time synchronization comparison terminal with a local clock of the time synchronization reference terminal; and providing the adjusted local clock of the time synchronization comparison terminal to at least one access layer device.

7. The apparatus according to claim 6, wherein the calculating module (54) is configured to:
calculate a difference between the first time deviation information and the second time deviation information by taking the second time deviation information as a reference value, and determine the difference as the third time deviation information.

8. The apparatus according to claim 6, wherein the second receiving module (52) is configured to:
select a time synchronization reference terminal with a highest priority from a plurality of time synchronization reference terminals as a designated time synchronization reference terminal;
receive the second time deviation information sent by the designated time synchronization reference terminal.

9. A clock synchronization apparatus, applied to a time synchronization comparison terminal, the apparatus comprising:
a calculating module (60), configured to calculate first time deviation information according to a first external clock source and a first local clock source;
a sending module (62), configured to send the first time deviation information to a server, wherein the server is connected to the time synchronization comparison terminal and a time synchronization reference terminal; and
a receiving module (64), configured to receive third time deviation information sent by the server, wherein the third time deviation information is acquired by the server according to second time deviation information and the first time deviation information, and the second time deviation information is acquired by the time synchronization reference terminal through calculation according to a second external clock source and a second local clock source;
wherein the clock synchronization apparatus is further configured for adjusting a local clock of the time synchronization comparison terminal based on the third time deviation information, to synchronize the local clock of the time synchronization comparison terminal with a local clock of the time synchronization reference terminal; and providing the adjusted local clock of the time synchronization comparison terminal to at least one access layer device.

10. The apparatus according to claim 9, wherein the calculating module (60) is configured to:
acquire clock information of the first external clock source and clock information of the first local clock source; and
perform a phase detection between the clock information of the first external clock source and the clock information of the first local clock source to acquire the first time deviation information.

11. The apparatus according to claim 9, wherein the apparatus is further configured to:
adjust a local clock of the time synchronization comparison terminal based on the third time deviation information, to synchronize the local clock of the time synchronization comparison terminal with a local clock of the time synchronization reference terminal; and
provide the adjusted local clock of the time synchronization comparison terminal to at least one access layer device.

12. A clock synchronization system, comprising a time synchronization reference terminal, a time synchronization comparison terminal and a server, wherein
the server is connected to the time synchronization comparison terminal and the time synchronization reference terminal, and the server comprises:
a first receiving module, configured to receive first time deviation information sent by the time synchronization comparison terminal;
a second receiving module, configured to receive second time deviation information sent by the time synchronization reference terminal;
a calculating module, configured to calculate third time deviation information between the second time deviation information and the first time deviation information; and
a sending module, configured to send the third time deviation information to the time synchronization comparison terminal;
the time synchronization comparison terminal comprises:
a calculating module, configured to calculate the first time deviation information according to a first external clock source and a first local clock source;
a sending module, configured to send the first time deviation information to the server; and
a receiving module, configured to receive the third time deviation information sent by the server;
the time synchronization reference terminal comprises:
a calculating module, configured to calculate the second time deviation information according to a second external clock source and a second local clock source; and
a sending module, configured to send the second time deviation information to the server;
wherein the time synchronization comparison terminal is further configured for adjusting a local clock of the time synchronization comparison terminal based on the third time deviation information, to synchronize the local clock of the time synchronization comparison terminal with a local clock of the time synchronization reference terminal; and providing the adjusted local clock of the time synchronization comparison terminal to at least one access layer device.

13. A storage medium, wherein the storage medium stores a computer program, and the computer program is configured to execute, when running, the method according to any one of claims 1 to 5.

14. An electronic device, comprising a memory and a processor, wherein the memory stores a computer program, and the processor is configured to run the computer program so as to execute the method according to any one of claims 1 to 5.

## Patentansprüche

1. Taktsynchronisationsverfahren, das von einem Server ausgeführt wird, umfassend:
Empfangen (S302) erster Zeitabweichungsinformation, die von einem Zeitsynchronisationsvergleichsterminal gesendet wurde, wobei die erste Zeitabweichungsinformation von dem Zeitsynchronisationsvergleichsterminal durch Berechnung nach einer ersten externen Taktquelle und einer ersten lokalen Taktquelle erfasst wird;
Empfangen (S304) zweiter Zeitabweichungsinformation, die von einem Zeitsynchronisationsreferenzterminal gesendet wurde, wobei die zweite Zeitabweichungsinformation von dem Zeitsynchronisationsreferenzterminal durch Berechnung nach einer zweiten externen Taktquelle und einer zweiten lokalen Taktquelle erfasst wird;
Berechnen (S306) dritter Zeitabweichungsinformation zwischen der zweiten Zeitabweichungsinformation und der ersten Zeitabweichungsinformation; und
Senden (S308) der dritten Zeitabweichungsinformation an das Zeitsynchronisationsvergleichsterminal, wobei die dritte Zeitabweichungsinformation dazu konfiguriert ist, einen lokalen Takt des Zeitsynchronisationsvergleichsterminals einzustellen, um den lokalen Takt des Zeitsynchronisationsvergleichsterminals mit einem lokalen Takt des Zeitsynchronisationsreferenzterminals zu synchronisieren; und den eingestellten lokalen Takt des Zeitsynchronisationsvergleichsterminals an wenigstens eine Zugangsnetzvorrichtung bereitzustellen.

2. Verfahren nach Anspruch 1, wobei Berechnen (S306) der dritten Zeitabweichungsinformation zwischen der zweiten Zeitabweichungsinformation und der ersten Zeitabweichungsinformation umfasst:
Berechnen einer Differenz zwischen der ersten Zeitabweichungsinformation und der zweiten Zeitabweichungsinformation durch Verwenden der zweiten Zeitabweichungsinformation als Referenzwert, und Bestimmen der Differenz als dritte Zeitabweichungsinformation.

3. Verfahren nach Anspruch 1, wobei Empfangen (S304) der zweiten Zeitabweichungsinformation, die von dem Zeitsynchronisationsreferenzterminal gesendet wurde, umfasst:
Auswählen eines Zeitsynchronisationsreferenzterminals mit einer höchsten Priorität aus einer Vielzahl von Zeitsynchronisationsreferenzterminals als bestimmtes Zeitsynchronisationsreferenzterminal;
Empfangen der zweiten Zeitabweichungsinformation, die von dem bestimmten Zeitsynchronisationsreferenzterminal gesendet wurde.

4. Taktsynchronisationsverfahren, das von einem Zeitsynchronisationsvergleichsterminal ausgeführt wird, umfassend:
Berechnen (S402) erster Zeitabweichungsinformation nach einer ersten externen Taktquelle und einer ersten lokalen Taktquelle;
Senden (S404) der ersten Zeitabweichungsinformation an einen Server, wobei der Server mit dem Zeitsynchronisationsvergleichsterminal und einem Zeitsynchronisationsreferenzterminal verbunden ist; und
Empfangen (S406) dritter Zeitabweichungsinformation, die von dem Server gesendet wurde, wobei die dritte Zeitabweichungsinformation von dem Server nach der zweiten Zeitabweichungsinformation und den ersten Zeitabweichungsinformation erfasst wird, und die zweite Zeitabweichungsinformation von dem Zeitsynchronisationsreferenzterminal durch Berechnung nach einer zweiten externen Taktquelle und einer zweiten lokalen Taktquelle erfasst wird;
Einstellen eines lokalen Takts des Zeitsynchronisationsvergleichsterminals basierend auf der dritten Zeitabweichungsinformation, um den lokalen Takt des Zeitsynchronisationsvergleichsterminals mit einem lokalen Takt des Zeitsynchronisationsreferenzterminals zu synchronisieren; und
Bereitstellen des eingestellten lokalen Takts des Zeitsynchronisationsvergleichsterminals an mindestens eine Zugangsnetzvorrichtung.

5. Verfahren nach Anspruch 4, wobei Berechnen (S402) der ersten Zeitabweichungsinformation nach der ersten externen Taktquelle und der ersten lokalen Taktquelle umfasst:
Erfassen Taktinformation der ersten externen Taktquelle und Taktinformation der ersten lokalen Taktquelle; und
Durchführen einer Phasenerkennung zwischen der Taktinformation der ersten externen Taktquelle und der Taktinformation der ersten lokalen Taktquelle, um die erste Zeitabweichungsinformation zu erfassen.

6. Taktsynchronisationseinrichtung, umfassend:
ein erstes Empfangsmodul (50), das dazu konfiguriert ist, eine erste Zeitabweichungsinformation zu empfangen, die von einem Zeitsynchronisationsvergleichsterminal gesendet wurde, wobei die erste Zeitabweichungsinformation von dem Zeitsynchronisationsvergleichsterminal durch Berechnung nach einer ersten externen Taktquelle und einer ersten lokalen Taktquelle erfasst wird;
ein zweites Empfangsmodul (52), das dazu konfiguriert ist, eine zweite Zeitabweichungsinformation zu empfangen, die von einem Zeitsynchronisationsreferenzterminal gesendet wurde, wobei die zweite Zeitabweichungsinformation von dem Zeitsynchronisationsreferenzterminal durch Berechnung nach einer zweiten externen Taktquelle und einer zweiten lokalen Taktquelle erfasst wird;
ein Berechnungsmodul (54), das dazu konfiguriert ist, die dritte Zeitabweichungsinformation zwischen der zweiten Zeitabweichungsinformation und der ersten Zeitabweichungsinformation zu berechnen; und
ein Sendemodul (56), das dazu konfiguriert ist, die dritte Zeitabweichungsinformation an das Zeitsynchronisationsvergleichsterminal zu senden, wobei die dritte Zeitabweichungsinformation dazu konfiguriert ist, einen lokalen Takt des Zeitsynchronisationsvergleichsterminals einzustellen, um den lokalen Takt des Zeitsynchronisationsvergleichsterminals mit einem lokalen Takt des Zeitsynchronisationsreferenzterminals zu synchronisieren; und den eingestellten lokalen Takt des Zeitsynchronisationsvergleichsterminals an mindestens eine Zugangsnetzvorrichtung bereitzustellen.

7. Einrichtung nach Anspruch 6, wobei das Berechnungsmodul (54) dazu konfiguriert ist, um:
eine Differenz zwischen der ersten Zeitabweichungsinformation und der zweiten Zeitabweichungsinformation durch Verwenden der zweiten Zeitabweichungsinformation als Referenzwert zu berechnen, und die Differenz als dritte Zeitabweichungsinformation zu bestimmen.

8. Einrichtung nach Anspruch 6, wobei das zweite Empfangsmodul (52) dazu konfiguriert ist, um:
ein Zeitsynchronisationsreferenzterminal mit einer höchsten Priorität aus einer Vielzahl von Zeitsynchronisationsreferenzterminals als ein bestimmtes Zeitsynchronisationsreferenzterminal auszuwählen;
die zweite Zeitabweichungsinformation zu empfangen, die von dem bestimmten Zeitsynchronisationsreferenzterminal gesendet wurde.

9. Taktsynchronisationseinrichtung, die auf ein Zeitsynchronisationsvergleichsterminal angewendet wird, wobei die Einrichtung umfasst:
ein Berechnungsmodul (60), das dazu konfiguriert ist, eine erste Zeitabweichungsinformation nach einer ersten externen Taktquelle und einer ersten lokalen Taktquelle zu berechnen;
ein Sendemodul (62), das dazu konfiguriert ist, die erste Zeitabweichungsinformation an einen Server zu senden, wobei der Server mit dem Zeitsynchronisationsvergleichsterminal und einem Zeitsynchronisationsreferenzterminal verbunden ist; und
ein Empfangsmodul (64), das dazu konfiguriert ist, eine dritte Zeitabweichungsinformation zu empfangen, die von dem Server gesendet wurde, wobei die dritte Zeitabweichungsinformation von dem Server nach der zweiten Zeitabweichungsinformation und der ersten Zeitabweichungsinformation erfasst wird, und die zweite Zeitabweichungsinformation von dem Zeitsynchronisationsreferenzterminal durch Berechnung nach einer zweiten externen Taktquelle und einer zweiten lokalen Taktquelle erfasst wird;
wobei die Taktsynchronisationseinrichtung ferner dazu konfiguriert ist, einen lokalen Takt des Zeitsynchronisationsvergleichsterminals basierend auf der dritten Zeitabweichungsinformation einzustellen, um den lokalen Takt des Zeitsynchronisationsvergleichsterminals mit einem lokalen Takt des Zeitsynchronisationsreferenzterminals zu synchronisieren; und den eingestellten lokalen Takt des Zeitsynchronisationsvergleichsterminals an mindestens eine Zugangsnetzvorrichtung bereitzustellen.

10. Einrichtung nach Anspruch 9, wobei das Berechnungsmodul (60) dazu konfiguriert ist, um:
Taktinformation der ersten externen Taktquelle und Taktinformation der ersten lokalen Taktquelle zu erfassen; und
eine Phasenerkennung zwischen der Taktinformation der ersten externen Taktquelle und der Taktinformation der ersten lokalen Taktquelle durchzuführen, um die ersten Zeitabweichungsinformation zu erfassen.

11. Einrichtung nach Anspruch 9, wobei die Einrichtung ferner dazu konfiguriert ist, um:
einen lokalen Takt des Zeitsynchronisationsvergleichsterminals basierend auf der dritte Zeitabweichungsinformation einzustellen, um den lokalen Takt des Zeitsynchronisationsvergleichsterminals mit einem lokalen Takt des Zeitsynchronisationsreferenzterminals zu synchronisieren; und
den eingestellten lokalen Takt des Zeitsynchronisationsvergleichsterminals an mindestens eine Zugangsnetzvorrichtung bereitzustellen.

12. Taktsynchronisationssystem, umfassend ein Zeitsynchronisationsreferenzterminal, ein Zeitsynchronisationsvergleichsterminal und einen Server, wobei
der Server mit dem Zeitsynchronisationsvergleichsterminal und dem Zeitsynchronisationsreferenzterminal verbunden ist und der Server umfasst:
ein erstes Empfangsmodul, das dazu konfiguriert ist, eine erste Zeitabweichungsinformation zu empfangen, die von dem Zeitsynchronisationsvergleichsterminal gesendet wurde;
ein zweites Empfangsmodul, das dazu konfiguriert ist, eine zweite Zeitabweichungsinformation zu empfangen, die von dem Zeitsynchronisationsreferenzterminal gesendet wurde;
ein Berechnungsmodul, das dazu konfiguriert ist, die dritte Zeitabweichungsinformation zwischen der zweiten Zeitabweichungsinformation und der ersten Zeitabweichungsinformation zu berechnen; und
ein Sendemodul, das dazu konfiguriert ist, die dritte Zeitabweichungsinformation an das Zeitsynchronisationsvergleichsterminal zu senden;
wobei das Zeitsynchronisationsvergleichsterminal umfasst:
ein Berechnungsmodul, das dazu konfiguriert ist, die erste Zeitabweichungsinformation nach einer ersten externen Taktquelle und einer ersten lokalen Taktquelle zu berechnen;
ein Sendemodul, das dazu konfiguriert ist, die erste Zeitabweichungsinformation an den Server zu senden; und
ein Empfangsmodul, das dazu konfiguriert ist, die dritte Zeitabweichungsinformation zu empfangen, die von dem Server gesendet wurde;
wobei das Zeitsynchronisationsreferenzterminal umfasst:
ein Berechnungsmodul, das dazu konfiguriert ist, die zweite Zeitabweichungsinformation nach einer zweiten externen Taktquelle und einer zweiten lokalen Taktquelle zu berechnen; und
ein Sendemodul, das dazu konfiguriert ist, die zweite Zeitabweichungsinformation an den Server zu senden;
wobei das Zeitsynchronisationsvergleichsterminal ferner dazu konfiguriert ist, einen lokalen Takt des Zeitsynchronisationsvergleichsterminals basierend auf der dritten Zeitabweichungsinformation einzustellen, um den lokalen Takt des Zeitsynchronisationsvergleichsterminals mit einem lokalen Takt des Zeitsynchronisationsreferenzterminals zu synchronisieren; und den eingestellten lokalen Takt des Zeitsynchronisationsvergleichsterminals an mindestens eine Zugangsnetzvorrichtung bereitzustellen.

13. Speichermedium, wobei das Speichermedium ein Computerprogramm speichert, und das Computerprogramm dazu konfiguriert ist, wenn es funktioniert, das Verfahren nach einem der Ansprüche 1 bis 5 auszuführen.

14. Elektronische Vorrichtung, umfassend einen Speicher und einen Prozessor, wobei der Speicher ein Computerprogramm speichert und der Prozessor dazu konfiguriert ist, das Computerprogramm funktionieren zu lassen, um das Verfahren nach einem der Ansprüche 1 bis 5 auszuführen.

## Revendications

1. Procédé de synchronisation d'horloge, exécuté par un serveur, comprenant :
la réception (S302) d'une première information d'écart temporel envoyée par un terminal de comparaison de synchronisation temporelle, la première information d'écart temporel étant obtenue par le terminal de comparaison de synchronisation temporelle par calcul selon une première source d'horloge externe et une première source d'horloge locale;
la réception (S304) d'une seconde information d'écart temporel envoyée par un terminal de référence de synchronisation temporelle, la seconde information d'écart temporel étant obtenue par le terminal de référence de synchronisation temporelle par calcul selon une seconde source d'horloge externe et une seconde source d'horloge locale ;
le calcul (S306) d'une troisième information d'écart temporel entre la seconde information d'écart temporel et la première information d'écart temporel ; et
l'envoi (S308) de la troisième information d'écart temporel au terminal de comparaison de synchronisation temporelle, la troisième information d'écart temporel étant configurée pour ajuster une horloge locale du terminal de comparaison de synchronisation temporelle, afin de synchroniser l'horloge locale du terminal de comparaison de synchronisation temporelle avec une horloge locale du terminal de référence de synchronisation temporelle ; et la fourniture de l'horloge locale ajustée du terminal de comparaison de synchronisation temporelle à au moins un dispositif de couche d'accès.

2. Procédé selon la revendication 1, dans lequel le calcul (S306) de la troisième information d'écart temporel entre la seconde information d'écart temporel et la première information d'écart temporel comprend :
le calcul d'une différence entre la première information d'écart temporel et la seconde information d'écart temporel en prenant la seconde information d'écart temporel comme valeur de référence, et la détermination de la différence comme la troisième information d'écart temporel.

3. Procédé selon la revendication 1, dans lequel la réception (S304) de la seconde information d'écart temporel envoyée par le terminal de référence de synchronisation temporelle comprend :
la sélection d'un terminal de référence de synchronisation temporelle ayant la priorité la plus élevée parmi une pluralité de terminaux de référence de synchronisation temporelle comme terminal de référence de synchronisation temporelle désigné ;
la réception de la seconde information d'écart temporel envoyée par le terminal de référence de synchronisation temporelle désigné.

4. Procédé de synchronisation d'horloge exécuté par un terminal de comparaison de synchronisation temporelle, le procédé comprenant :
le calcul (S402) d'une première information d'écart temporel selon une première source d'horloge externe et une première source d'horloge locale ;
l'envoi (S404) de la première information d'écart temporel à un serveur, le serveur étant connecté au terminal de comparaison de synchronisation temporelle et à un terminal de référence de synchronisation temporelle ; et
la réception (S406) d'une troisième information d'écart temporel envoyée par le serveur, la troisième information d'écart temporel étant obtenue par le serveur selon une seconde information d'écart temporel et la première information d'écart temporel, et la seconde information d'écart temporel étant obtenue par le terminal de référence de synchronisation temporelle par calcul selon une seconde source d'horloge externe et une seconde source d'horloge locale ;
l'ajustement d'une horloge locale du terminal de comparaison de synchronisation temporelle sur la base de la troisième information d'écart temporel, afin de synchroniser l'horloge locale du terminal de comparaison de synchronisation temporelle avec une horloge locale du terminal de référence de synchronisation temporelle ; et
la fourniture de l'horloge locale ajustée du terminal de comparaison de synchronisation temporelle à au moins un dispositif de couche d'accès.

5. Procédé selon la revendication 4, dans lequel le calcul (S402) de la première information d'écart temporel selon la première source d'horloge externe et la première source d'horloge locale comprend :
l'acquisition d'informations d'horloge de la première source d'horloge externe et d'informations d'horloge de la première source d'horloge locale ; et
l'exécution d'une détection de phase entre les informations d'horloge de la première source d'horloge externe et les informations d'horloge de la première source d'horloge locale pour obtenir la première information d'écart temporel.

6. Appareil de synchronisation d'horloge, comprenant :
un premier module de réception (50), configuré pour recevoir une première information d'écart temporel envoyée par un terminal de comparaison de synchronisation temporelle, la première information d'écart temporel étant obtenue par le terminal de comparaison de synchronisation temporelle par calcul selon une première source d'horloge externe et une première source d'horloge locale ;
un second module de réception (52), configuré pour recevoir une seconde information d'écart temporel envoyée par un terminal de référence de synchronisation temporelle, la seconde information d'écart temporel étant obtenue par le terminal de référence de synchronisation temporelle par calcul selon une seconde source d'horloge externe et une seconde source d'horloge locale ;
un module de calcul (54), configuré pour calculer une troisième information d'écart temporel entre la seconde information d'écart temporel et la première information d'écart temporel ; et
un module d'envoi (56), configuré pour envoyer la troisième information d'écart temporel au terminal de comparaison de synchronisation temporelle, la troisième information d'écart temporel étant configurée pour ajuster une horloge locale du terminal de comparaison de synchronisation temporelle, afin de synchroniser l'horloge locale du terminal de comparaison de synchronisation temporelle avec une horloge locale du terminal de référence de synchronisation temporelle ; et pour fournir l'horloge locale ajustée du terminal de comparaison de synchronisation temporelle à au moins un dispositif de couche d'accès.

7. Appareil selon la revendication 6, dans lequel le module de calcul (54) est configuré pour :
calculer une différence entre la première information d'écart temporel et la seconde information d'écart temporel en prenant la seconde information d'écart temporel comme valeur de référence, et déterminer la différence comme la troisième information d'écart temporel.

8. Appareil selon la revendication 6, dans lequel le second module de réception (52) est configuré pour :
sélectionner un terminal de référence de synchronisation temporelle ayant la priorité la plus élevée parmi une pluralité de terminaux de référence de synchronisation temporelle comme terminal de référence de synchronisation temporelle désigné ;
recevoir la seconde information d'écart temporel envoyée par le terminal de référence de synchronisation temporelle désigné.

9. Appareil de synchronisation d'horloge, appliqué à un terminal de comparaison de synchronisation temporelle, l'appareil comprenant :
un module de calcul (60), configuré pour calculer une première information d'écart temporel selon une première source d'horloge externe et une première source d'horloge locale ;
un module d'envoi (62), configuré pour envoyer la première information d'écart temporel à un serveur, le serveur étant connecté au terminal de comparaison de synchronisation temporelle et à un terminal de référence de synchronisation temporelle ; et
un module de réception (64), configuré pour recevoir une troisième information d'écart temporel envoyée par le serveur, la troisième information d'écart temporel étant obtenue par le serveur selon une seconde information d'écart temporel et la première information d'écart temporel, et la seconde information d'écart temporel étant obtenue par le terminal de référence de synchronisation temporelle par calcul selon une seconde source d'horloge externe et une seconde source d'horloge locale ;
l'appareil de synchronisation d'horloge étant en outre configuré pour ajuster une horloge locale du terminal de comparaison de synchronisation temporelle sur la base de la troisième information d'écart temporel, afin de synchroniser l'horloge locale du terminal de comparaison de synchronisation temporelle avec une horloge locale du terminal de référence de synchronisation temporelle ; et pour fournir l'horloge locale ajustée du terminal de comparaison de synchronisation temporelle à au moins un dispositif de couche d'accès.

10. Appareil selon la revendication 9, dans lequel le module de calcul (60) est configuré pour :
acquérir des informations d'horloge de la première source d'horloge externe et des informations d'horloge de la première source d'horloge locale ; et
exécuter une détection de phase entre les informations d'horloge de la première source d'horloge externe et les informations d'horloge de la première source d'horloge locale pour obtenir la première information d'écart temporel.

11. Appareil selon la revendication 9, dans lequel l'appareil est en outre configuré pour :
ajuster une horloge locale du terminal de comparaison de synchronisation temporelle sur la base de la troisième information d'écart temporel, afin de synchroniser l'horloge locale du terminal de comparaison de synchronisation temporelle avec une horloge locale du terminal de référence de synchronisation temporelle ; et
fournir l'horloge locale ajustée du terminal de comparaison de synchronisation temporelle à au moins un dispositif de couche d'accès.

12. Système de synchronisation d'horloge, comprenant un terminal de référence de synchronisation temporelle, un terminal de comparaison de synchronisation temporelle et un serveur, dans lequel
le serveur est connecté au terminal de comparaison de synchronisation temporelle et au terminal de référence de synchronisation temporelle, et le serveur comprend :
un premier module de réception, configuré pour recevoir une première information d'écart temporel envoyée par le terminal de comparaison de synchronisation temporelle ;
un second module de réception, configuré pour recevoir une seconde information d'écart temporel envoyée par le terminal de référence de synchronisation temporelle ;
un module de calcul, configuré pour calculer une troisième information d'écart temporel entre la seconde information d'écart temporel et la première information d'écart temporel ; et
un module d'envoi, configuré pour envoyer la troisième information d'écart temporel au terminal de comparaison de synchronisation temporelle ;
le terminal de comparaison de synchronisation temporelle comprend :
un module de calcul, configuré pour calculer la première information d'écart temporel selon une première source d'horloge externe et une première source d'horloge locale ;
un module d'envoi, configuré pour envoyer la première information d'écart temporel au serveur ; et
un module de réception, configuré pour recevoir la troisième information d'écart temporel envoyée par le serveur ;
le terminal de référence de synchronisation temporelle comprend :
un module de calcul, configuré pour calculer la seconde information d'écart temporel selon une seconde source d'horloge externe et une seconde source d'horloge locale ; et
un module d'envoi, configuré pour envoyer la seconde information d'écart temporel au serveur ;
dans lequel le terminal de comparaison de synchronisation temporelle est en outre configuré pour ajuster une horloge locale du terminal de comparaison de synchronisation temporelle sur la base de la troisième information d'écart temporel, afin de synchroniser l'horloge locale du terminal de comparaison de synchronisation temporelle avec une horloge locale du terminal de référence de synchronisation temporelle ; et pour fournir l'horloge locale ajustée du terminal de comparaison de synchronisation temporelle à au moins un dispositif de couche d'accès.

13. Support de stockage, dans lequel le support de stockage stocke un programme informatique, et le programme informatique est configuré pour exécuter, lorsqu'il est exécuté, le procédé selon l'une quelconque des revendications 1 à 5.

14. Dispositif électronique, comprenant une mémoire et un processeur, la mémoire stockant un programme informatique, et le processeur étant configuré pour exécuter le programme informatique afin d'exécuter le procédé selon l'une quelconque des revendications 1 à 5.
